# EUROPÄISCHE PATENTANMELDUNG

(11) **EP 1 148 261 A2**
(43) Veröffentlichungstag der Anmeldung: **24.10.2001**
(21) Anmeldenummer: 01108437.3
(22) Anmeldetag: 04.04.2001
(51) Int. Cl.: F16C 19/52

(54) **Wälzlager mit fernabfragbaren Erfassungseinheiten**

(30) Priorität: 10.04.2000 DE 10017572
(71) Anmelder: FAG Industrial Bearings AG, 97421 Schweinfurt (DE); INSTITUT FÜR MIKROTECHNIK MAINZ GmbH, 55129 Mainz-Hechtsheim (DE)
(72) Erfinder: Ehrfeld, Wolfgang, Prof. Dr., 55124 Mainz (DE); Graeff, Volker, 55131 Mainz (DE); Michel, Frank, Dr., 55116 Mainz (DE); Gempper, Sven, Dr., 97332 Volkach (DE); Heim, Jens, 97422 Schweinfurt (DE); Hering, Joachim, Dr., 97078 Würzburg (DE); Masuch, Horst, 97422 Schweinfurt (DE); Streit, Edgar, 97711 Poppenlauer (DE); Hassiotis, Vasilis, 81737 München (DE); Van der Knokke, Henri, 97464 Niederwerrn (DE)

(57) **Zusammenfassung**

Wälzlager, die als Wälzlagerkomponenten mindestens einen Lagerring (1) mit einer ersten Lauffläche, einen weiteren Lagerring (2) mit einer zweiten Lauffläche und zwischen diesen Laufflächen angeordnete Wälzkörper (3) aufweisen, mit mindestens einer in diese Wälzlagerkomponenten integrierten Erfassungseinheit (8), die über Antennen (10) funkabfragbar ist, wobei die Erfassungseinheit (8) mit mindestens einem nach dem SAW- und / oder BAW-Prinzip arbeitenden Bauelement die Längenänderungen und / oder Temperaturänderungen im Material des Wälzlagers erfasst und das Messergebnis nach Eintreffen eines Funksignals zurücksendet.

## Beschreibung

Die Erfindung betrifft Wälzlager mit fernabfragbarer Erfassungseinheit zur Erfassung von Wälzlagerdaten. Die Erfassungseinheit enthält dabei mindestens ein akustoelektronisches Bauelement, das nach dem SAW-Prinzip oder BAW-Prinzip arbeitet.

### Stand der Technik

Wälzlager mit Einheiten zur Erfassung von Wälzlagerdaten, wie auf die Lagerung einwirkende Kräfte oder im Betriebszustand entstehender Körperschall, sind bekannt.

Zur Schadensfrüherkennung oder zur Überwachung des Betriebszustandes einer Maschine eignen sich u.a. direkt an den Wälzlagern angeordnete Erfassungseinheiten. So kann zum Beispiel der direkt am Wälzlager entstehende und für die Schadensfrüherkennung wichtige Körperschall oder die am Wälzlager abgestützten Kräfte durch am Wälzlager angeordnete Erfassungseinheiten bestimmt werden.

In sogenannten Kraftmesslagern, wie zum Beispiel in dem US-Patent US 5 952 587, werden die Wälzlager mit Dehnmessstreifen ausgestattet, um auf das Lager einwirkende Kräfte zu messen. Dabei werden die DMS meistens in Aussparungen auf der Außenseite des Außenringes und / oder in der Bohrung des Innenringes angeordnet. Die Funktionsweise des Kraftmesslagers beruht darauf, dass die sich im Lager abstützenden Kräfte in den Lagerringen Verformungen verursachen. Diese übertragen sich auf den am Außen- oder am Innenring befestigten Dehnungsmessstreifen und erzeugen Widerstandsänderungen, die gemessen werden können. Dabei sind die geringe Empfindlichkeit und Auflösung der DMS bezüglich der erfassbaren Verformungen von Nachteil. Aufgrund der Stoßempfindlichkeit der DMS ist eine entsprechend vorsichtige Handhabung solcher mit DMS ausgestatteter Wälzlager notwendig. Weiterhin können die DMS keinen in den Lagern entstehenden Körperschall erfassen, da die durch die Körperschallwellen verursachten Dehnungen zu gering sind. Außerdem kann die hohe Temperaturabhängigkeit der DMS, wie im "Handbuch für experimentelle Spannungsanalyse", Hrsg. Prof. Dr.-Ing. Christof Rohrbach, VDI-Verlag, Düsseldorf, 1989 beschrieben, bei der Messung von kleinen Dehnungen große Fehler bewirken.

Im VDI Fortschritt-Bericht Reihe 8, Nr. 729, §1.2 wird die Ausstattung von Wellen mit DMS-basierten Drehmomentaufnehmern genannt. Die Wellen werden dabei im Durchmesser soweit reduziert, dass die durch die Belastung auftretenden Spannungen bzw. Dehnungen den elastischen Bereich des verwendeten Werkstoffs voll ausnutzen. Denn nur so ist die hinreichend genaue Erfassung der Dehnungen und Spannungen mit den DMS möglich. Im Falle einer Anwendung der genannten DMS-basierten Drehmomentaufnehmer in Wälzlagern würde durch die notwendige Reduzierung der Querschnitte der Wälzlagerkomponenten die Betriebssicherheit und die Lebensdauer der Wälzlager stark reduziert. Umgekehrt führt eine wälzlagergerechte Dimensionierung bei der Verwendung von DMS - Drehmomentaufnehmern zu einer unzureichenden Genauigkeit.

### Aufgabe

Der Erfindung liegt die Aufgabe zugrunde, ein Wälzlager mit einer fernabfragbaren Erfassungseinheit anzugeben, die eine ausreichende Empfindlichkeit und Auflösung bzgl. der zu erfassenden Wälzlagerdaten aufweist.

Die Lösung der Aufgabe erfolgt gemäß den Merkmalen der Ansprüche 1,4, 6, 9 und 10.

Die jeweiligen Unteransprüche betreffen vorteilhafte Ausgestaltungen.

Die fernabfragbaren Erfassungseinheiten mit mindestens einem nach dem SAW-Prinzip oder BAW-Prinzip arbeitenden akustoelektronischen Bauelement können Wälzlagerdaten, wie Messgrößen und /oder Wälzlagerparameter, erfassen. Die Erfassungseinheiten können auf den Wälzlagerkomponenten, wie Außenring, Innenring, Käfig, Dichtung, Wälzkörpern, und /oder lagerintegrierten Umbauteilen, angeordnet werden. Dabei können die Erfassungseinheiten auf den Wälzlagerkomponenten in eingearbeiteten Aussparungen, zum Beispiel in nutenförmigen Vertiefungen, angebracht werden.

Bei SAW-Bauelementen handelt es sich um akustoelektronische Elemente, bei denen mindestens ein Teilbereich einer Substratoberfläche mit piezoelektrischen Eigenschaften ausgestattet ist. Auf oder im piezoelektrischen Bereich der Substratoberfläche können unterschiedlich ausgeformte, fingerförmige oder interdigitale Elektrodenstrukturen aufgebracht sein. Elektrische Signale können über diese Elektrodenstrukturen im piezoelektrischen Oberflächenbereich in Oberflächenwellen auf der Substratoberfläche, im Englischen meist surface-acoustic-waves (SAW) genannt, umgewandelt werden. Die sich ausbreitenden Oberflächenwellen können wiederum über weitere oder aber auch über die zur Erzeugung der Oberflächenwellen genutzten Elektrodenstrukturen wieder in elektrische Signale zurückgewandelt werden. Durch vielfältige Gestaltungsmöglichkeiten der Elektrodenstrukturen und durch Auswahl geeigneter Materialien können diese Oberflächenwellen- oder SAW-Bauelemente auf unterschiedliche Aufgabenstellungen im Frequenzfilter - und Sensorbereich angepasst werden.

BAW-Baulemente sind, wie die SAW-Baulemente, akustoelektronische Elemente, die Bereiche mit piezoelektrischen Eigenschaften enthalten. Im Falle von BAW-Elementen werden durch Elektrodenstrukturen im oder auf dem piezoelektrischen Bereich der Bauelemente elektrische Signale in das Bauelement eingekoppelt, die sich nicht in Form von Oberflächenwellen auf der Substratoberfläche sondern in Form von akustische Volumenwellen im Substrat, im Englischen auch bulk-acoustic-waves (BAW) genannt, ausbreiten. Die sich ausbreitenden Volumenwellen können auch bei diesen BAW-Elementen durch Elektrodenstrukturen wieder in elektrische Signale zurückgewandelt werden.

### Vorteile des erfindungsgemäßen Wälzlagers

Vorteilhaft bei der Verwendung der SAW-Elemente zur Messung von durch Kräften in den Wälzlagerkomponenten verursachten Verformungen ist seine im Vergleich zu konventionellen Dehnmessstreifen höhere Empfindlichkeit und die weitgehend lineare Charakteristik, die einen größeren Messbereich mit einer höheren Auflösung, d.h. mit feineren Abstufungen im Bezug auf die erfassten Dehnungen erlauben, als mit Dehnmessstreifen erreicht werden kann. Dies wird beispielsweise in der deutschen Offenlegungsschrift DE 195 15 788 A1, Spalte 3, Zeile 23ff beschrieben. Diese Schrift zeigt einen als Biegebalken geformten Durchflussmesser, der aufgrund eines entsprechend geformten Anströmungsprofiles proportional zur Strömungsgeschwindigkeit ausgelenkt wird. Die auf der Biegebalkenober- und unterseite angebrachten Dehnmessstreifen oder SAW-Elemente können zur Erfassung der Auslenkung und damit zur Bestimmung der Durchflussmenge eingesetzt werden.

In der Dissertation "Drehmomentmessung auf Basis von fernabfragbaren Oberflächenwellenresonatoren von Dr. Jürgen Michel, TU München, 26.11.1996 wird in §2.35 Seite 37 beschrieben, dass die kleinen Abmessungen der SAW-Sensoren es möglich machen, Maxima und Minima mechanischer Schwingungen bis in den MHz-Bereich an üblichen Objekten messtechnisch richtig zu erfassen.

Im VDI Fortschritt-Bericht Reihe 8, Nr. 729 §4.5 wird die Überlegenheit der SAW-Erfassungseinheit hinsichtlich Genauigkeit und Dynamik genannt.

Aufgrund der genannten höheren Empfindlichkeit und der Möglichkeit der hochfrequenten Abfrage mit einer hohen zeitlichen Auflösung bei der Detektion von Dehnungen können die SAW-Elemente sogar die durch die Körperschallwellen in den Wälzlagerkomponenten entstehenden minimalen Verformungen erfassen.

Mit den erfindungsgemäßen Wälzlagerungen kann folglich eine Schadensfrüherkennung über die Analyse des im Betriebszustandes entstehenden Körperschalls erfolgen.

Die höhere Empfindlichkeit bezüglich der Erfassung von Materialdehnungen mit SAW-Elementen ermöglicht es weiterhin, ohne eine wesentliche Reduzierung der Querschnittsflächen der Wälzlagerkomponenten die auftretenden Dehnungen zu detektieren.

Die Miniaturisierung der erfindungsgemäßen Erfassungseinheiten ermöglicht deren Einbau in Wälzlager mit genormten Baugrößen.

Des weiteren sind die einfache und kostengünstige Massenfertigung der SAW-Elemente, die Robustheit und ihre hohe Lebensdauer für die Anwendung in Wälzlagern von großem Vorteil.

Ein weiterer Vorteil des SAW bzw. BAW-Sensoren gegenüber dem DMS-Messstreifen besteht darin, dass diese Sensoren gleichzeitig eine Längenänderung bzw. Temperaturänderung messen können und im Antwortsignal noch fest eingestellte Identifikationsmerkmale des SAW bzw. BAW - Sensors mit aussenden können. Dieser Vorteil kann dazu genutzt werden, dass bei mehreren Sensoren auf einem Wälzlager z.B.: die Lage der Sensoren mit zurückgemeldet wird (Antwortsignal: Identifikationssignal und aktueller Messwert). Bei mehreren Wälzlagern in einem Gehäuse kann dieses Identifikationssignal dazu genutzt werden, um das Antwortsignal einem bestimmten Wälzlager zuzuordnen. In dem Identifikationssignal können auch wälzlagerspezifische Daten mit zurückgemeldet werden, die für die spätere Berechnung von Wälzlagerdaten benötigt werden.

### Stand der Technik zu SAW-Sensor- und Identifikationssystemen

Bauelemente, die nach dem SAW-Prinzip arbeiten, sind bekannt. Sie werden vor allem in Form von Frequenzfiltern im Bereich der Telekommunikation und in Audiogeräten eingesetzt. Ebenfalls bekannt sind SAW-Anordnungen mit Sensor- und/ oder Identifikationsfunktionen, die drahtgebunden oder über Funkstrecken abfragbar sind.

SAW-Sensoren können zur Spannungs-, Temperatur-, Druck- und Beschleunigungsmessung sowie als Chemo- und Biosensoren eingesetzt werden. In der Druckschrift Sensorik, Band 8, Hrsg. Karl Walter Bonfig, expert verlag, werden ab Seite 25 "Möglichkeiten und Grenzen der Oberflächenwellen-Sensorik" beschrieben.

Ein drahtlos abfragbarer nach dem SAW-Prinzip arbeitender passiver Sensor wird in der EP 619 906 B1 beschrieben. Der Sensor enthält erste SAW-Strukturen als Sensorelemente und zweite SAW-Strukturen als Referenzelemente. Die abfragbaren Messwerte werden aus einem Vergleich der sich aus den Abfragesignalen ergebenden Antwortsignale der Sensor- und Referenzelemente gebildet.

In der DE 198 07 004 A1 wird ein Sensorsystem zur Überwachung des Kraftschlusses von Fahrzeugreifen mit der Fahrbahn angegeben. Dabei werden per Funk fernabfragbare Sensoren mit SAW-Elementen nahe der Reifenkarkasse im Fahrzeugreifen integriert. Die Sensoren können dabei Messwerte zu verschiedenen Reifen-Betriebsgößen, wie Druck, Schwingung, Verschleiß und Identifikation, an das Überwachungssystem liefern. In dieser Offenlegungsschrift wird ebenfalls die Möglichkeit genannt, das SAW-Element mit weiteren klassischen Sensorelementen, wie zum Beispiel kapazitiven Beschleunigungsaufnehmern, zu koppeln. Dabei dient das SAW-Element zum einen als Signalübermittler als auch als Energielieferant für den kapazitiven Sensor.

Der Einbau von SAW-Elementen in eine Welle, zum Beispiel zur Messung des Drehmomentes, wird in der Literatur (Sensorik, Band 8, Karl Walter Bonfig Hrsg., expert verlag) beschrieben. Nicht erwähnt wird jedoch die Integration von SAW-Elementen zur Erfassung von Wälzlagerdaten oder Körperschall in Wälzlagern.

Des weiteren ist es bekannt, SAW-Elemente mit einer Identifizierungsfunktion auszustatten, allerdings wird nicht beschrieben, weitere Parameter, wie Kenngrößen, in den SAW-Elementen zu speichern. Die gemäß der vorliegenden Erfindung gespeicherten Kenngrößen können in Kombination mit den durch die Sensoren gemessenen Werte in den Abfrageeinheiten genutzt werden, um entsprechende auf die sich jeweils im Einsatz befindlichen Wälzlager abgestimmte Zustandsbeschreibungen zu ermitteln.

Auch die Kombination der o.g. Identifizierungs- und Sensorfunktion in einer Erfassungseinheit mit SAW-Element wird in verschiedenen Publikationen genannt. Beispiele für solche kombinierten Identifizierungs- und Sensorsysteme werden in der DE 42 17 049 A1, dem US Patent US 5 872 520 und der DE 198 54 606 A1 beschrieben.

Neben den oben beschriebenen SAW-Elementen und ihren Anwendungsmöglichkeiten sind auch Bulk-Acoustic-Wave-(BAW)-Elemente bekannt. So wird in der Druckschrift "Remote sensing using quartz sensors" verfasst von Sachs, Thomas u.a. erschienen in SPIE Vol. 2718, S 47ff, neben SAW-Elementen auch der Einsatz von BAW-Elementen zur Erfassung von mechanischen Spannungen in einer Welle genannt.

### Beschreibung zu den Ansprüchen

Gemäß einer ersten Ausführungsform ist die Erfassungseinheit über Kabel fernabfragbar. Hierzu ist die Erfassungseinheit vorteilhaft über ein Kabel mit einer oder mehreren Abfrageeinheiten verbunden. Denkbar sind auch mehrere Erfassungseinheiten eines Wälzlagers über ein Kabel mit einer Abfrageeinheit zu verbinden. Die Fernabfrage über Kabel erlaubt eine hochfrequente Abfrage der zu erfassenden Wälzlagerdaten, was vor allem für die Körperschallanalyse von besonderem Vorteil ist. Die Fernabfrage beginnt mit einem Steuerimpuls, mit dem die Erfassungseinheiten an dem Kabel angesteuert werden. Die Anwort der einzelnen Erfassungseinheiten wird über das gleiche Kabel in zeitlichem Abstand zurückgesendet.

Gemäß einer zweiten Ausführungsform ist die Erfassungseinheit über Funk abfragbar. Hierdurch kann auf eine Kabelverbindung zu Abfrageeinheiten verzichtet werden. Nach einer vorteilhaften Variante weist die Erfassungseinheit hierzu eine in diese integrierte Antenne auf; die Antenne kann in das Bauelement nach dem SAW- oder/ und BAW-Prinzip integriert sein.

Nach einer weiteren Variante ist die Erfassungseinheit zur Fernabfrage über Funk mit einer Antenne verbunden. So ist es denkbar, bei einem vollständig von einem Metallgehäuse umgebenen Wälzlager die Antenne nicht direkt an der Erfassungseinheit anzubringen, sondern über eine Kabelverbindung aus der unmittelbaren Umgebung der Wälzlagerungen herauszuführen.

Vorteilhaft ist gemäß der obigen Variante die Antenne am Wälzlager angeordnet. Hierzu ist besonders vorteilhaft die Antenne auf der gleichen Wälzlagerkomponente wie die Erfassungseinheit selbst angeordnet. Es ist auch denkbar, die Antenne auf einer anderen Wälzlagerkomponente als der die Erfassungseinheit tragenden Komponente anzuordnen. Hierzu ist die Antenne über ein Kabel mit der Erfassungseinheit verbunden.

Eine für eine Funkfrequenz von zum Beispiel 2,4 GHz ausgelegte Antenne ist nur wenige Zentimeter lang und kann beispielsweise in gewundener oder mäanderförmiger Form angeordnet sein.

Nach einer weiteren Ausführungsform sind mit der fernabfragbaren Erfassungseinheit die Wälzlagerdaten aufgrund des Eintritts eines Ereignisses erfassbar.

Gemäß einer Variante ist solch ein Ereignis das Eintreffen eines Abfragesignals. Hierzu weist die Erfassungseinheit vorteilhaft mindestens ein passives SAW- und/ oder BAW-Bauelement auf. In diesem Fall der passiven Funktionsweise, bezieht die Erfassungseinheit die zur Funktion notwendige Energie aus einem in Form von elektromagnetischen Wellen übertragenen Abfragesignal. Dazu werden die elektromagnetischen Wellen von einem SAW-Element empfangen und in Form von akustischen Oberflächenwellen im SAW-Element zwischengespeichert. In dieser Variante ohne Kabelverbindungen können sogar Wälzlagerdaten von nur schwer zugänglichen oder aber gar nicht über Kabel erreichbaren Positionen in einer Maschine abgefragt werden.

Gemäß einer weiteren Variante zu obiger Ausführungsform ist solch ein Ereignis die Änderung einer Meßgröße. Hierzu wird vorteilhaft ein piezoelektrisches Material aufweisendes Bauelement funktionell mit der Erfassungseinheit derart verbunden, daß durch mechanischen Druck und/ oder Zug, beispielsweise durch Schwingungen, auf das Bauelement die Erfassungseinheit mit einer durch den piezoelektrischen Effekt generierten elektrischen Spannung versorgt wird. Die Ansteuereinheit hat dabei die Aufgabe das SAW- bzw. BAW Bauelement bei vorher definierten Wälzlagerzuständen (Temperatur, Schwingungen, Dehnungen...) zum Senden eines Signals zu veranlassen. Dabei verbindet die Ansteuereinheit den SAW-bzw. BAW-Sensor mit der Energieversorgung. Eine ähnliche Anordnung wird beispielsweise in der US 4 237 454 beschrieben.

Vorteilhaft weist das Bauelement nach dem SAW- oder BAW-Prinzip einen integrierten Parameterspeicher auf, der bei der Fernabfrage einen oder mehrere voreingestellte Parameter liefert. Bevorzugt sind solche Parameter kodierte Informationen zum Wälzlagertyp, Herstellungsort, Herstellungszeitpunkt und/ oder Seriennummer. Die gespeicherten Informationen ermöglichen eine eindeutige Identifikation der mit entsprechenden Erfassungseinheiten ausgestatteten Wälzlagerungen. Weiterhin ist es aufgrund der Vielzahl an unterschiedlich kodiert herstellbaren SAW-Elementen sogar möglich, umfassendere Herstellerinformationen und weitere statische Wälzlagerdaten in entsprechenden SAW-Elementen zu speichern.

Die Parameter eines Wälzlagers können auch in verschiedenen auf einem Wälzlager angebrachten Erfassungseinheiten gespeichert sein, so dass sich die Gesamtinformation zu einem Wälzlager auf mehrere Erfassungseinheiten verteilt. Dadurch kann entweder die Anzahl der unterschiedlich kodierten SAW-oder BAW-Elemente reduziert werden oder aber die Informationsmenge pro Wälzlager erhöht werden.

Hierzu wird vorteilhaft folgendes bekanntes Vorgehen eingesetzt: Durch das Setzen von Reflektoren auf einem SAW-Element in bestimmten Abständen, ähnlich den bekannten Barcodes, erhalten die Antwortsignale eines SAW-Elements ein individuelles Grundmuster so, dass es möglich ist je nach Reflektorzahl und Abständen zwischen den Reflektoren, Informationen auf dem SAW-Element zu speichern (Sensorik, Band 8, Hrsg. Karl Walter Bonfig, s. 29).

Bevorzugt ist das Bauelement nach dem SAW- oder BAW-Prinzip zum Bestimmen mindestens einer der Meßgrößen Temperatur und Dehnung ausgebildet.

Neben der direkten Messung von Größen mit dem Bauelement selbst ist gemäß einer weiteren Variante das Bauelement nach dem SAW- oder BAW-Prinzip zum Bestimmen einer Meßgröße funktionell mit einem für diese Meßgröße geeigneten Sensor verbunden. Hierzu finden insbesondere impedanzbelastbare SAW- oder BAW-Bauelemente Verwendung, an die ein oder mehrere die Impedanz entsprechend einer zu messenden Größe verändernden Sensoren elektrisch verbunden sind. Dies sind beispielsweise kapazitive Beschleunigungssensoren oder Sensoren für mit SAW-Elementen selbst nicht messbare Größen.

Gemäß einer bevorzugten Ausführungsform ist das Bauelement nach dem SAW- oder BAW-Prinzip derart angeordnet, dass mit der mindestens einen erfaßten Wälzlagermessgröße mindestens eine Wälzlagerkenngröße ableitbar ist. Wälzlagerkenngrößen sind hier beispielsweise:
- Drehzahl
- Drehrichtung
- Kräfte und Momente in den drei Raumrichtungen
- translatorische und rotatorische Schwingungen
- translatorische und rotatorische Schwingbeschleunigungen
- Temperatur

### Beschreibung

Die Funktionsweise der Kraftmessung beruht darauf, dass durch die vom Lager abgestützte Last in den Ringen Verformungen verursacht werden. Diese übertragen sich auf die Erfassungseinheiten mit SAW- oder BAW-Element. Am Wälzlager entsteht ein Signal, dessen Effektivwert proportional der am Ort der Erfassungseinheit angreifenden Kraft ist.

Die Verteilung der Last über die Wälzkörper des Wälzlagers ist abhängig von der Lagerluft, den Passungen der Wälzlagerringen auf der Welle und im Gehäuseteil und von der Form und Steifheit der Welle und des Gehäuseteils.

Theoretisch wird die Lastverteilung in einem Wälzlager am genauesten erfaßt, indem soviel Erfassungseinheiten wie nur möglich im Bereich der Laufbahnen angebracht werden. In der Praxis reicht es aber, wenn die Anzahl der Erfassungseinheiten nach der Anzahl der Wälzkörper gewählt werden. Dies ergibt sich aus der Tatsache, dass die Last über die einzelnen Wälzkörper von dem drehenden auf den stehenden Laufring übertragen wird und aus den Gleichgewichtsbetrachtungen für das gesamte Lager. Durch eine Interpolationsroutine, wie in der US-Patentschrift US 5.952.587 beschrieben, ist es möglich, mit deutlich weniger Sensoren eine gute Orientierung für die Wälzkörperkräfte zu bekommen.

Die Funktionsweise der Drehrichtungserfassung beruht darauf, dass zwei nebeneinander angeordnete Erfassungseinheiten durch die einzelnen Wälzkörper nacheinander angeregt werden. Unter der Bedingung, dass der Abstand zwischen zwei Wälzkörpern von dem Abstand zwischen den Erfassungseinheiten abweicht, kann anhand der Reihenfolge der erzeugten Signale nun die Drehrichtung ermittelt werden.

Die Funktionsweise der Messung der translatorischen und rotatorischen Schwingungen beruht darauf, daß die von den Schwingungen beschleunigten Massen (Umgebungsteile und Wälzlager) Reaktionskräfte im Wälzlager erzeugen. Mittels SAW-/BAW-Sensoren können die von den Reaktionskräften erzeugten Verformungen in den Wälzlagerkomponenten erfaßt werden. Das SAW-/BAW-Sensorsignal kann anschließend mittels einer Analyse durch Hüllkurvendetektion, siehe FAG Publikation WL 80136 "Diagnose von Wälzlagern in Maschinen und Anlagen" weiterverarbeitet werden.

In der Druckschrift Sensorik, Band 8, Hrsg. Karl Walter Bonfig, wird beschrieben wie SAW-Sensoren als Temperaturfühler eingesetzt werden können. Die Temperatur eines Wälzlagers, insbesondere die unter Umständen unterschiedliche Temperatur der Laufringe ist von großer Bedeutung, da die Lagerluft direkt von der Temperatur abhängig ist. Eine zu hohe Temperatur oder Temperaturdifferenz zwischen Innen- und Außenring kann zu Schäden am Wälzlager oder sogar auf einen baldigen Ausfall eines Wälzlagers hinweisen. Weiterhin kann im Falle von Schmierstoffmangel im Wälzlager ein Temperaturanstieg durch die Erfassungseinheiten registriert werden.

### Beschreibung zu den Figuren

Die SAW- bzw. BAW-Sensoren Anordnung wird an anhand von 4 Figuren beispielsweise näher erläutert.

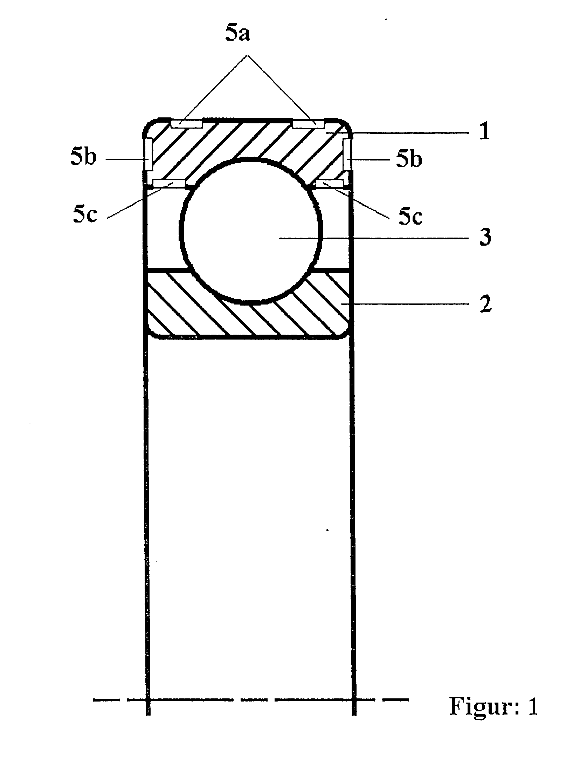

Figur 1 zeigt ein Wälzlager im Schnitt parallel zur Rotationsachse. Zwischen dem Außenring 1 und dem Innenring 2 sind die Wälzkörper 3 angeordnet. Zur Aufnahme des SAW bzw. BAW-Sensors sind ringförmig ausgebildete Nuten 5a, 5b, 5c im Außenring dargestellt. Die Tiefe der einzelnen Nuten muß so gewählt werden, dass der flache SAW- bzw. BAW-Sensor dort aufgenommen werden kann. Die Anzahl der ringförmigen Nuten hängt von der einzelnen Aufgabenstellung ab.

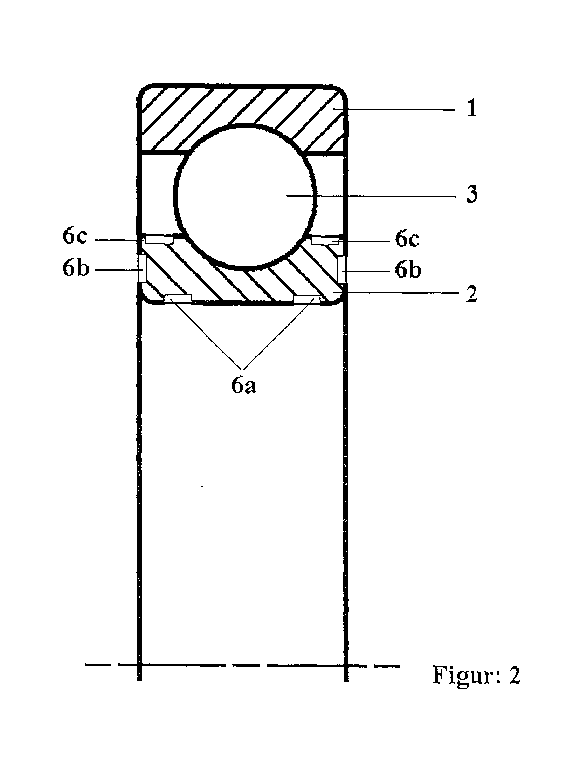

Figur 2 zeigt ein Wälzlager im Schnitt parallel zur Rotationsachse. Zwischen dem Außenring 1 und dem Innenring 2 sind die Wälzkörper 3 angeordnet. Zum Unterschied zu Figur 1 sind hier die umlaufenden Nuten 6a, 6b, 6c am Innenring 2 angeordnet.

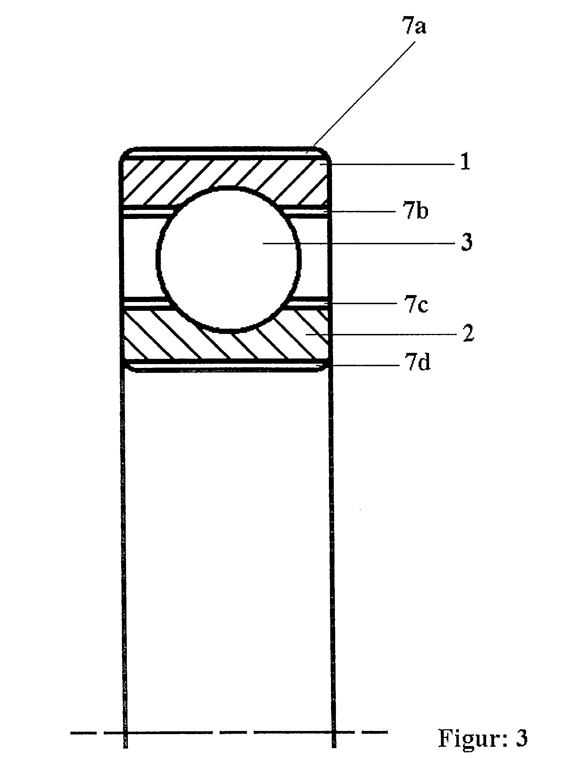

Figur 3 zeigt ein Wälzlager im Schnitt parallel zur Rotationsachse. Zwischen dem Außenring 1 und dem Innenring 2 sind die Wälzkörper 3 angeordnet. Zur Aufnahme des SAW bzw. BAW-Sensors sind querlaufende Nuten dargestellt. Die verschiedenen Lagen in denen diese Nuten 7a, 7b, 7c, 7d angeordnet werden können sind gezeigt. Die Tiefe der einzelnen Nuten muß so tief gewählt werden, dass der flache SAW- bzw. BAW-Sensor dort aufgenommen werden kann ohne hervor zu stehen. Die Anzahl der im Umfang des Ringes vorzusehenden Nuten hängt von der einzelnen Aufgabenstellung ab. Die Antenne der SAW- bzw. BAW-Sensoren ist an der Seitenfläche des Außenoder Innenringes angeordnet.

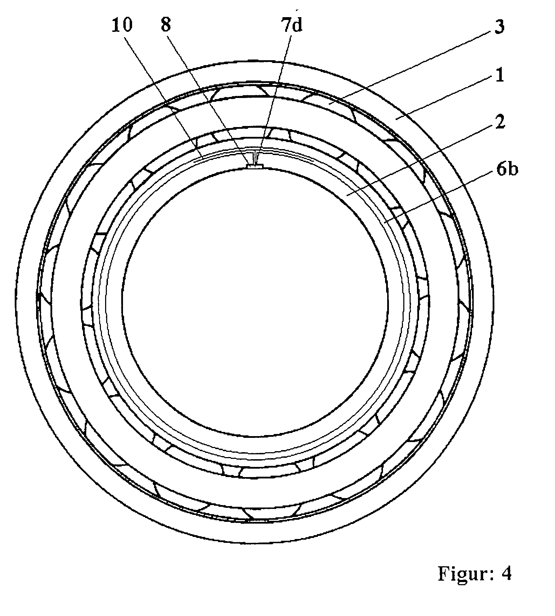

Figur 4 zeigt ein Wälzlager in der Draufsicht. Der SAW- bzw. BAW-Sensor 8 ist in einer querlaufenden Nut 7d am Innenring 2 angeordnet. Die Antenne 10 des SAW- bzw. BAW-Sensors 8 ist in einer Nut 6b der Seitenfläche des Innenringes 2 aufgenommen. Die Antenne 10 ist gegenüber dem Innenring 2 elektrisch abgeschirmt.

### Bezugszeichenliste:

- 1: Außenring
- 2: Innenring
- 3: Wälzkörper
- 5a, 5b, 5c,: ringförmige Nuten im Außenring
- 6a, 6b, 6c,: ringförmige Nuten im Innenring
- 7a, 7b, 7c, 7d,: axial verlaufende Nuten, parallel zur Rotationsachse des Lagers
- 8: Erfassungseinheit
- 10: Antenne des Sensors

## Patentansprüche

1. Wälzlager, die als Wälzlagerkomponenten mindestens einen Lagerring (1) mit einer ersten Lauffläche, einen weiteren Lagerring (2) mit einer zweiten Lauffläche und zwischen diesen Laufflächen angeordnete Wälzkörper (3) aufweisen, mit mindestens einer in diese Wälzlagerkomponenten integrierten Erfassungseinheit (8), die über Antennen (10) funkabfragbar ist, wobei die Erfassungseinheit (8) mit mindestens einem nach dem SAW- und / oder BAW-Prinzip arbeitenden Bauelement die Längenänderungen und / oder Temperaturänderungen im Material des Wälzlagers erfasst und das Messergebnis nach Eintreffen eines Funksignals zurücksendet.

2. Wälzlager nach Anspruch 1, **dadurch gekennzeichnet, dass** neben dem Messwert noch zusätzliche Identifikationsmerkmale des sendenden SAW- oder BAW-Sensors mit zurückgesendet werden, um bei mehreren Erfassungseinheiten den Messwert exakt einer Erfassungseinheit zuordnen zu können.

3. Wälzlager nach Anspruch 1, **dadurch gekennzeichnet, dass** Erfassungseinheit (8) und Antenne (10) an der gleichen Wälzlagerkomponente angeordnet sind.

4. Wälzlager, die als Wälzlagerkomponenten mindestens einen Lagerring mit einer ersten Lauffläche, einen weiteren Lagerring mit einer zweiten Lauffläche und zwischen diesen Laufflächen angeordnete Wälzkörper aufweisen, mit mindestens einer in diese Lagerringe integrierten Erfassungseinheit (8), die über Kabel angeschlossen ist, wobei die Erfassungseinheit (8) mit mindestens einem nach dem SAW- und / oder BAW-Prinzip arbeitenden Bauelement die Längenänderungen und / oder Temperaturänderungen im Material des Wälzlagers erfasst und das Messergebnis nach Eintreffen eines Steuerimpulses zurücksendet.

5. Wälzlager nach Anspruch 4, **dadurch gekennzeichnet, dass** neben dem Messwert noch zusätzlich Identifikationsmerkmale des sendenden SAW-oder BAW-Sensors mit zurückgesendet wird, um bei mehreren Erfassungseinheiten an einem Kabel den Messwert exakt einer Erfassungseinheit zuordnen zu können.

6. Wälzlager, die als Wälzlagerkomponenten mindestens einen Lagerring mit einer ersten Lauffläche, einen weiteren Lagerring mit einer zweiten Lauffläche und zwischen diesen Laufflächen angeordnete Wälzkörper aufweisen, mit mindestens einer in diese Wälzlagerkomponenten integrierten Erfassungseinheit (8), die über Antennen (10) funkabfragbar ist, wobei die Erfassungseinheit (8) mit mindestens einem nach dem SAW- und / oder BAW-Prinzip arbeitenden Bauelement kodierte Identifikationsmerkmale nach Eintreffen eines Funksignals zurücksendet.

7. Wälzlager nach Anspruch 6, **dadurch gekennzeichnet, dass** die kodierten Identifikationsmerkmale Daten wie Wälzlagertyp, Herstellungsort, Herstellungszeitpunkt und / oder Seriennummer enthalten.

8. Wälzlager nach Anspruch 6, **dadurch gekennzeichnet, dass** die kodierten Identifikationsmerkmale in mehreren SAW- oder BAW-Sensoren gespeichert sind.

9. Wälzlager, die als Wälzlagerkomponenten mindestens einen Lagerring mit einer ersten Lauffläche, einen weiteren Lagerring mit einer zweiten Lauffläche und zwischen diesen Laufflächen angeordnete Wälzkörper aufweisen, mit mindestens einer in diese Wälzlagerkomponenten integrierte Erfassungseinheit (8), wobei die Erfassungseinheit nach dem SAW- und / oder BAW-Prinzip arbeitet und dieser Erfassungseinheit eine Energieversorgung und eine Ansteuereinheit zugeordnet ist, die bei bestimmen Wälzlagerbetriebszuständen die Erfassungseinheit ansteuert, so dass diese über Antennen (10) ein Funksignal absetzen kann.

10. Wälzlager, die als Wälzlagerkomponenten mindestens einen Lagerring mit einer ersten Lauffläche, einen weiteren Lagerring mit einer zweiten Lauffläche und zwischen diesen Laufflächen angeordnete Wälzkörper aufweisen, mit mindestens einer in diese Wälzlagerkomponenten integrierte Erfassungseinheit (8), wobei eine Erfassungseinheit mit mindestens einem nach dem SAW- und / oder BAW-Prinzip arbeitenden Bauelement zur Bestimmen einer Messgröße funktionell mit einem geeigneten Sensor verbunden ist.

11. Wälzlager nach Anspruch 10, **dadurch gekennzeichnet, dass** diese Kombination aus Erfassungseinheit und Sensor über Kabel abfragbar ist.

12. Wälzlager nach Anspruch 10, **dadurch gekennzeichnet, dass** diese Kombination aus Erfassungseinheit und Sensor über Antennen (10) und Funksignal abfragbar ist.
